# EUROPEAN PATENT APPLICATION

(11) **EP 2 689 669 A1**
(43) Date of publication of application: **29.01.2014**
(21) Application number: 12759975.1
(22) Date of filing: 23.03.2012
(51) Int. Cl.: A23F 5/40, A23F 5/24

(54) **COFFEE BEVERAGE AND PROCESS FOR PRODUCING SAME**

(30) Priority: 24.03.2011 JP 2011065611
(71) Applicant: MEIJI CO, LTD., Koto-ku Tokyo 136-8908 (JP)
(72) Inventor: NAKATANI, Sanae, Odawara-shi Kanagawa 250-0862 (JP); IMAZAWA, Takeshi, Odawara-shi Kanagawa 250-0862 (JP); AKAMATSU, Ayumi, Odawara-shi Kanagawa 250-0862 (JP)
(74) Representative: Isarpatent
(86) International application number: PCT/JP2012/057478
(87) International publication number: WO 2012/128347

(57) **Abstract**

Provided is a coffee beverage which achieves a good balance among sweet taste, bitter taste, and unpleasant taste at both liquid temperatures of 10°C or less, which is a liquid temperature of the beverage while being stored in a refrigerator, and around ordinary temperature (for example, 20 to 30°C), which is an assumed liquid temperature of the beverage when it is drunk.

The coffee beverage comprises fructose, maltose, and a cacao extract. Fructose is contained in a form of, for example, glucose-fructose syrup. Maltose is contained in a form of, for example, maltose syrup. The content of glucose-fructose syrup and the content of maltose syrup in the coffee beverage are each preferably 1 to 10% by weight. The weight ratio between glucose-fructose syrup and maltose syrup is preferably 3:1 to 1: 3. The content of the cacao extract in the coffee beverage is preferably 0.01 to 0.1% by weight. The coffee beverage can further comprise sugar.

## Description

### Technical Field

The present invention relates to a coffee beverage and a method of producing the coffee beverage.

### Background Art

Coffee beverage has high palatability, because coffee beverage has a pleasant bitter taste derived from coffee, a pleasant sweet taste derived from a sweetener, and a rich taste derived from a milk constituent in a well-balanced fashion of these tastes. Therefore, coffee beverage is very popular among consumers including children and adults. Moreover, coffee beverage is available in a wide variety of product forms including a product form to be kept refrigerated and a product form capable of kept at room temperature (i.e. a shelf-stable product form). Consumers can select a coffee beverage in an appropriate product form depending on the consumption situation such as the place for drinking the coffee beverage.

Drinking refrigerated coffee beverage directly is widely known as one of the consumption forms of drinking coffee beverage.

For example, there are observed such drinking forms as follows : a drinking form of drinking coffee beverage after taking the beverage out of a home refrigerator; and a drinking form of drinking coffee beverage immediately or at home after being carried to home, after buying the coffee beverage in a refrigerated condition at a convenience store, an automatic vending machine, and the like. Especially, in a single-person household, such a life pattern as having no or only a small-capacity home refrigerator and buying a beverage to be needed in a needed amount at a convenience store, an automatic vending machine, and the like has become established.

Also, there are widely observed such situations as drinking a coffee beverage while walking, or drinking a coffee beverage little by little at work or during break time, because the coffee beverage is one of discretionary drinks (i.e. favorite drinks of many people) .

Thus far, in designing a coffee beverage product, it is common practice for those skilled in the art to design flavor such as sweet taste, bitter taste, and the like on the assumption that, for example, in the case of a product to be refrigerated which needs to be stored at 10°C or less, the product will enter consumers' mouths at a liquid temperature (i.e. a product temperature) of 10°C or less. Also, in the case of a so-called "hot" coffee beverage which is stored in a hot vending machine (i.e. an automatic vending machine for selling a warmed beverage in a can or the like), the design of flavor has been conducted on the assumption that the coffee beverage will enter consumers' mouths at a liquid temperature equal to a storage temperature of the coffee beverage in a hot vending machine.

However, those (i.e. consumers) who drink a coffee beverage generally live at room temperature (i.e. ordinary temperature), and the coffee beverage is generally placed under an atmosphere of ordinary temperature while it is drunk. Hence, for example, even in the case of a coffee beverage to be refrigerated which requires storage at 10°C or less, the liquid temperature (i.e. the product temperature) of the coffee beverage inevitably rises in such a situation.

It has been known that the rise in the liquid temperature of the coffee beverage changes the sensitivity (i.e. the threshold value) of a human tongue to sweet taste or bitter taste. For example, the after-mentioned Non-Patent Literature 1 discloses that the threshold value for sweet taste is the lowest at around 30°C. That is, the same coffee beverage is perceived with different sensitivity to sweet taste, depending on whether the beverage is one refrigerated at 10°C or less, or one placed at around ordinary temperature (for example, 20°C to 30°C). Actually, consumers who complaint that coffee beverage is "too sweet" tend to take a lot of time to drink the beverage after opening it.

The rise in the liquid temperature of the coffee beverage changes the sensitivity not only to sweet taste but also to bitter taste and unpleasant taste. For example, unpleasant bitter taste of coffee tends to be hardly perceived at 10°C or less, and can be perceived at around ordinary temperature (for example, 20 to 30°C).

As mentioned above, it has been known that the rise in the liquid temperature of the coffee beverage brings about changes in sweet taste, bitter taste, and unpleasant taste, and consumers' attention has been drawn by, for example, specifying the liquid temperature when the beverage is drunk. However, an idea of producing a coffee beverage having a pleasant sweet taste with product design considering changes in the liquid temperature has not been known.

For example, the after-mentioned Patent Literature 1 discloses a method of producing a container-packed coffee beverage product having a refreshing aftertaste after being drunk, characterized in that the method comprising blending a vegetable fat and oil at a ratio of 0.15 to 2 per unit weight of milk fat in the beverage in the production process of the container-packed coffee which is to be prepared by heat pasteurization. However, Patent Literature 1 does not disclose an idea of designing the product considering the changes in sweet taste, bitter taste, and unpleasant taste associated with changes in the liquid temperature.

### Citation List

### Patent Literatures

[Patent Literature 1] JP 4387440 B1

### Non-Patent Literatures

[Non-Patent Literature 1] Katsuhiko Iwasaki, "Influence of temperature of gustometric fluid on gustatory threshold: individuals with healthy teeth in 40s", Nihon University Dental Journal, Vol. 80, p. 175 to 181, (2006)

### Summary of the Invention

### Problems to be Solved by the Invention

object of the present invention is to provide a coffee beverage which achieves a good balance among sweet taste, bitter taste, and unpleasant taste at both liquid temperatures of 10°C or less, which is a liquid temperature of the beverage while it is stored in a refrigerator, and around ordinary temperature (for example, 20 to 30°C), which is an assumed liquid temperature of the beverage when it is drunk, as well as a method of producing the coffee beverage.

### Means for Solving the Problem

As a result of diligent study aiming at achieving the above object, the present inventors perfected the present invention upon discovering the fact that a flavorous coffee beverage having a pronounced sweet taste at a liquid temperature of 10°C or less and gradually having a refreshing sweet taste as the temperature increases, and not having an unpleasant bitter taste of coffee even when the temperature increases can be obtained by using fructose, maltose, and a cacao extract as raw materials of the coffee beverage.

That is, the coffee beverage of the present invention contains fructose, maltose, and a cacao extract.

### Advantageous Effects of the Invention

According to the present invention, it is possible to suppress deterioration in palatability (i.e. decease in good taste) associated with the changes in sweet taste or bitter taste caused by an increase in the liquid temperature of a coffee beverage, while such deterioration was observed in the cases of the conventional coffee beverages. Therefore, it is possible to resolve the complaints of the consumers who tend to take a lot of time to drink the coffee beverage and have complaints about its sweetness.

Moreover, the realization of a coffee beverage of the present invention which is "delicious even when lukewarm" eliminates the conventional need to draw consumers' attention to the specified temperature suitable for drink, and enables to expand consumers' demand, because flavorous taste can be maintained even when the liquid temperature increases by, for example, carrying around the beverage for a long period to time from the time of purchase to the time to drink the beverage.

### Embodiments for Carrying Out the Invention

Hereinafter, the present invention will be described in detail. The present invention is not limited to the respective embodiments described below.

A coffee beverage of the present invention contains fructose, maltose, and a cacao extract in addition to coffee (for example, instant coffee) which is an essential component for labeling the beverage as a coffee beverage.

In the present description, the term "coffee beverage" includes all beverages containing coffee. That is, the term "coffee beverage" used in the present invention includes "coffee" (5 g or more/100 g in terms of raw beans (i.e. green beans) ; the denominator "100 g" is the total weight of the coffee beverage), "coffee beverage" (2.5 g or more and less than 5 g/100 g in terms of raw beans), and "soft beverage containing coffee" (1 g or more and less than 2.5 g/100 g in terms of raw beans), which are defined in "Fair Competition Regulations Relating to Markings of Coffee Beverages or the Like" in accordance with "Act against Unjustifiable Premiums and Misleading Representations", and further includes a beverage of less than 1 g/100 g in terms of raw beans.

The "coffee beverage" of the present invention also includes even a beverage marked such as "milk beverage" or the like without the term "coffee", if the beverage contains coffee.

Coffee used in the present invention is one containing a component derived from an extract liquid of coffee beans. Examples of coffee used in the present invention include an extract liquid obtained by roasting and grinding coffee beans and then extracting the extract liquid from the ground beans by hot water; and a powder (i.e. instant coffee) obtained by drying the extract liquid.

In the present invention, fructose is used in a form of fructose alone or a sugar composition containing fructose.

Examples of sugar composition containing fructose include, but are not limited to, an isomerized sugar syrup (i.e. a high-fructose corn syrup (HFCS)).

Examples of isomerized sugar syrup include, but are not limited to, glucose-fructose syrup, fructose-glucose syrup, high fructose syrup, glucose-fructose syrup containing sugar, fructose-glucose syrup containing sugar, and high fructose syrup containing sugar.

The isomerized sugar syrup is defined as syrup containing glucose or fructose as a main component which is prepared by hydrolyzing starch by an enzyme such as amylase or an acid to obtain a sugar solution composed mainly of glucose, and then, isomerizing the sugar solution by glucose isomerase or an alkali. Glucose-fructose syrup is defined as one that contains fructose at a content (i.e. a ratio of fructose in the total amount of sugars) of less than 50% by weight. Fructose-glucose syrup is defined as one that contains fructose at a content of 50% by weight or more and less than 90% by weight. High fructose syrup is defined as one that contains fructose at a content of 90% by weight or more. Glucose-fructose syrup containing sugar (also referred to as sugar-mixed glucose-fructose syrup) is defined as one that is prepared by adding sugar to the glucose-fructose syrup in an amount not exceeding the amount of sugar in the glucose-fructose syrup. Fructose-glucose syrup containing sugar (also referred to as sugar-mixed fructose-glucose syrup) is defined as one that is prepared by adding sugar to the fructose-glucose syrup in an amount not exceeding the amount of sugar in the fructose-glucose syrup. High fructose syrup containing sugar (also referred to as sugar-mixed high fructose syrup) is defined as one that is prepared by adding sugar to the high fructose syrup in an amount not exceeding the amount of sugar in the high fructose syrup.

Isomerized sugar syrup is defined as one that has such quality as containing fructose at a content of 35% by weight or more, according to Japan Agricultural Standards.

In the present invention, among the examples of isomerized sugar syrup, glucose-fructose syrup is preferred in view of flavor and versatility. In the present invention, glucose-fructose syrup containing fructose at a content of 35% by weight or more and less than 50% by weight is used as one of preferable examples. An example of a commercially available product of glucose-fructose syrup is one containing fructose at a content of about 42% by weight.

In the present invention, maltose is used in a form of maltose alone or a sugar composition containing maltose.

Examples of sugar composition containing maltose include, but are not limited to, glutinous starch syrup such as maltose syrup; and starch syrup solid containing maltose. These exemplified materials (i.e. glutinous starch syrup and starch syrup solid) can be easily available as commercial products.

Among various forms of maltose used in the present invention, maltose syrup is preferred in view of flavor and versatility.

In the present description, maltose syrup means starch syrup containing maltose at a content of 40% by weight or more. The upper limit of the content of maltose in maltose syrup is generally, but is not limited to, 70% by weight in consideration of other components constituting the syrup (especially, dextrin which is a polysaccharide).

One of preferred examples of maltose syrup is one containing maltose at a content of 45 to 60% by weight (for example, about 50% by weight).

Examples of commercially available products of maltose syrup include one containing 50% by weight of maltose, 12% by weight of maltotriose, and 8% by weight of glucose; one containing 57% by weight of maltose, 40% by weight of dextrin, and 3% by weight of glucose; and one containing 49% by weight of maltose, 47% by weight of dextrin, and 4% by weight of glucose.

The content of fructose in a coffee beverage of the present invention is not particularly limited, but is preferably 0.3 to 5% by weight, more preferably 0.5 to 3% by weight, especially preferably 1 to 2% by weight.

When fructose is used in the form of glucose-fructose syrup, the content of the glucose-fructose syrup in a coffee beverage of the present invention is not particularly limited, but is preferably 1 to 10% by weight, more preferably 2 to 7% by weight, still more preferably 2 to 5% by weight, especially preferably 3 to 4% by weight.

The content of maltose in a coffee beverage of the present invention is not particularly limited, but is preferably 0.3 to 5% by weight, more preferably 0.5 to 3% by weight, especially preferably 1 to 2% by weight.

When maltose is used in the form of maltose syrup, the content of the maltose syrup in a coffee beverage of the present invention is not particularly limited, but is preferably 1 to 10% by weight, more preferably 2 to 7% by weight, still more preferably 2 to 5% by weight, especially preferably 3 to 4% by weight.

The weight ratio between fructose and maltose is preferably 4:1 to 1:4, more preferably 3:1 to 1:3, still more preferably 2:1 to 1:2, especially preferably 1.5:1 to 1:1.5.

When fructose is used in the form of glucose-fructose syrup and maltose is used in the form of maltose syrup, the weight ratio between glucose-fructose syrup and maltose syrup is preferably 3:1 to 1:3, more preferably 2:1 to 1:2, still more preferably 1.5:1 to 1:1.5, especially preferably 1:1.

As cacao extract used in the present invention, any cacao extract can be used with no limitation on the type or production area of the cacao. For example, commercially available cacao extracts can be used.

Cacao extract can be obtained by extraction from cacao seeds with an extraction solvent. Examples of the extraction solvent include hydrous ethanol and hydrous 1,3-butylene glycol.

The cacao extract can be used in either form of powder or liquid.

The content (e.g. the value in terms of solid in the case where the cacao extract is liquid) of the cacao extract in a coffee beverage of the present invention is not particularly limited, but is preferably 0.01 to 0.1% by weight, more preferably 0.05 to 0.09% by weight, still more preferably 0.06 to 0.08% by weight. When the content is less than 0.01% by weight, the effect of the present invention cannot be sufficiently exerted. The case where the content exceeds 0.1% by weight is not preferred, because the flavor of cacao is perceived as an unpleasant taste.

A coffee beverage of the present invention can further contain a rawmaterial (i.e. an optional component) other than coffee, fructose, maltose, and a cacao extract, by including the optional component in a raw material solution or adding the optional component at an appropriate stage of process in the production. Examples of the optional component include, but are not limited to, a food or a food additive such as a dairy product, a sweetener, a fat and oil raw material, a seasoning agent, a flavoring agent, a dyestuff, an emulsifier, a stabilizer, and a preserving agent.

Examples of the dairy product include skim milk powder and salt-free butter. Examples of the sweetener include sugar, soft brown sugar, honey, and maple syrup. Examples of the fat and oil raw material include an animal fat and oil, a plant fat and oil, and artificial cream. Examples of the seasoning agent include table salt, rock salt, and cinnamon.

Among the optional components, sugar is preferably used in the present invention in view of flavor and the like. The content of sugar in a coffee beverage of the present invention is preferably 1 to 5% by weight, more preferably 2 to 4% by weight, still more preferably 2 to 3% by weight.

As a method of producing a coffee beverage of the present invention, any of known methods can be employed. However, the production method of the present invention is not limited to such known methods.

The method of producing a coffee beverage of the present invention preferably includes a mixed solution preparation step of dissolving a water-soluble raw material containing coffee, fructose, maltose, and a cacao extract, which are essential components, and sugar and the like, which are optional components, in water to prepare a mixed solution; and a heat pasteurization or sterilization step of pasteurizating or sterilizing the obtained mixed solution by heat to obtain the coffee beverage.

The mixed solution preparation step is carried out by, for example, adding the raw material except water to water at one time. The heat pasteurization or sterilization step is carried out by, for example, heating the mixed solution obtained in the mixed solution preparation step at 60 to 140°C for 2 seconds to 30 minutes.

Moreover, the above-mentioned production method can further include a cooling step of cooling the coffee beverage after the heat pasteurization or sterilization step. In this case, cooling is carried out so that the liquid temperature of the coffee beverage becomes 10°C or less, for example.

### Examples

Hereinafter, the present invention will be described in more detail with Example. The following Example by no means limit the present invention. It is to be noted that "%" in the following description is a value in terms of weight.

### (Example 1)

0.6 kg of instant coffee (i.e. soluble coffee powder), 3.11 kg of glucose-fructose syrup containing 42% of fructose, 3.05 kg of maltose syrup containing 50% of maltose (more specifically, one containing 12% of maltotriose and 8% of glucose in addition to maltose), 0.075 kg of an cacao extract from Ghana, 4 kg of skim milk powder, 1 kg of salt-free butter, 2.75 kg of sugar, 0.02 kg of table salt, 0.19 kg of a flavoring agent, and 0.1 kg of a caramel color were added to water (i.e. water as raw material) so that the total weight of these raw materials including water was 100 kg, and then, stirred to be dissolved, thus obtaining a so-called base mix (i.e. a mixed solution) before pasteurization. The base mix was heat-pasteurized by using a plate type pasteurizer at 130°C for 2 seconds. After the pasteurization, the base mix was cooled to 10°C or less, and then, packed in a prescribed container. The packed product (i.e. coffee beverage) was a flavorous beverage with a pronounced sweet taste and without an unpleasant taste and a bitter taste derived from coffee when the temperature was 10°C or less. Moreover, when the liquid temperature was returned to 25°C by placing the packed product at room temperature, the product was a flavorous beverage with the same level of pronounced sweet taste as that of 10°C or less and without an unpleasant taste and a bitter taste derived from coffee.

### (Comparative Example 1)

0.6 kg of instant coffee, 4.0 kg of fructose, 0.075 kg of an cacao extract from Ghana, 4 kg of skim milk powder, 1 kg of salt-free butter, 0.02 kg of table salt, 0.19 kg of a flavoring agent, and 0.1 kg of a caramel color were added to water (i.e. water as raw material) so that the total weight of these materials including water was 100 kg, and then, stirred to be dissolved, thus obtaining a base mix (i.e. a mixed solution) before pasteurization. The base mix was heat-pasteurized by using a plate type pasteurizer at 130°C for 2 seconds. After the pasteurization, the base mix was cooled to 10°C or less, and then, packed in a prescribed container. The packed product (i.e. coffee beverage) had a refreshing sweet taste, and had a tendency to give an unpleasant taste and a bitter taste derived from coffee when the temperature was 10°C or less. Moreover, when the liquid temperature was returned to 25°C by placing the packed product at room temperature, the product had a more refreshing sweet taste than that of 10°C or less and did not have a voluminous sweet taste as a whole.

### (Comparative Example 2)

0.6 kg of instant coffee, 20 kg of maltose syrup containing 50% of maltose, 0.075 kg of an cacao extract from Ghana, 4 kg of skim milk powder, 1 kg of salt-free butter, 0.02 kg of table salt, 0.19 kg of a flavoring agent, and 0.1 kg of a caramel color were added to water (i.e. water as raw material) so that the total weight of these raw materials including water was 100 kg, and then, stirred to be dissolved, thus obtaining a base mix (i.e. a mixed solution)before pasteurization. The base mix washeat-pasteurized by using a plate type pasteurizer at 130°C for 2 seconds. After the pasteurization, the base mix was cooled to 10°C or less, and then, packed in a prescribed container. The packed product (i.e. coffee beverage) had a pronounced sweet taste. However, the packed product did not have a refreshing sweet aftertaste when the temperature was 10°C or less. Moreover, when the liquid temperature was returned to 2 5°C by placing the packed product at room temperature, the packed product had a stronger sweet taste than that of 10°C or less.

For each of Example 1, Comparative Example 1, and Comparative Example 2, sensory evaluation of the resultant coffee beverage was performed by five expert panelists. The sensory evaluation was carried out on evaluation items of refreshing sensation of aftertaste, preference for refreshing sensation of aftertaste, sensation of coffee, and voluminous sensation of sweet taste on 5 grade evaluation of "2, 1, 0, -1, -2".

"Sensation of coffee" means intensity of flavor of coffee (e.g. aroma, taste, and the like) when the beverage is sipped. "Voluminous sensation of sweet taste" means intensity of richness coming from the sweet taste. Larger values in these evaluation items mean "strong" and "preferred".

A larger value in the evaluation of "refreshing sensation of aftertaste" does not necessarily mean that the flavor is in the expert panelist's preference. The value in the evaluation of "preference for refreshing sensation of aftertaste" means the degree of palatability (i.e. preference or liking) for refreshing sensation of aftertaste, and a larger value thereof means that the flavor is in the expert panelist's preference.

The sensory evaluation was performed at two liquid temperatures of 10°C and 25°C. Table 1 shows the results of the sensory evaluation of the coffee beverages at a liquid temperature of 10°C by the average of the values of 5 grade evaluation evaluated by the five expert panelists. Table 2 shows the results of the sensory evaluation of the coffee beverages at a liquid temperature of 25°C by the average of the values of 5 grade evaluation evaluated by the five expert panelists.

**[Table 1]**

| | refreshing sensation of aftertaste | preference for refreshing sensation of aftertaste | sensation of coffee | voluminous sensation of sweet taste |
|---|---|---|---|---|
| Example 1 | 0.0 | 0.6 | 1.1 | 1.6 |
| Comparative Example 1 | 1.9 | 1.2 | 1.4 | -1.0 |
| Comparative Example 2 | -0.8 | -0.8 | 0.4 | 1.4 |

**[Table 2]**

| | refreshing sensation of aftertaste | preference for refreshing sensation of aftertaste | sensation of coffee | voluminous sensation of sweet taste |
|---|---|---|---|---|
| Example 1 | 0.3 | 0.6 | 0.8 | 0.8 |
| Comparative Example 1 | 1.5 | 0.4 | 1.0 | -1.2 |
| Comparative Example 2 | -0.4 | -0.6 | -0.2 | 1.0 |

As shown in Tables 1 and 2, the sensory evaluation revealed that Example 1 was excellent in the preference for refreshing sensation of aftertaste, the sensation of coffee, and the voluminous sensation of sweet taste in a well-balanced fashion of these evaluation items at both liquid temperatures of 10°C and 25°C in comparison with Comparative Examples 1 and 2.

On the other hand, Comparative Example 1 was inferior in balance of flavor as a coffee beverage, because the voluminous sensation of sweet taste was weak, while the preference for refreshing sensation of aftertaste and the sensation of coffee were satisfactory. Comparative Example 2 was inferior in balance of flavor as a coffee beverage, because the preference for refreshing sensation of aftertaste, and the sensation of coffee were weak, while the voluminous sensation of sweet taste was strong.

## Claims

1. A coffee beverage comprising fructose, maltose, and a cacao extract.

2. The coffee beverage according to claim 1, wherein fructose is contained in a form of glucose-fructose syrup.

3. The coffee beverage according to claim 2, wherein maltose is contained in a form of maltose syrup.

4. The coffee beverage according to claim 3, wherein the content of the glucose-fructose syrup and the content of the maltose syrup in the coffee beverage are each 1 to 10% by weight.

5. The coffee beverage according to claim 3 or 4, wherein the weight ratio between the glucose-fructose syrup and the maltose syrup is 3:1 to 1:3.

6. The coffee beverage according to any one of claims 1 to 5, wherein the content of the cacao extract in the coffee beverage is 0.01 to 0.1% by weight.

7. The coffee beverage according to any one of claims 1 to 6, further comprising sugar.

8. The coffee beverage according to claim 7, wherein the content of the sugar in the coffee beverage is 1 to 5% by weight.

9. A method of producing the coffee beverage according to any one of claims 1 to 6, comprising:
a mixed solution preparation step of dissolving a water-soluble raw material comprising coffee, fructose, maltose, and a cacao extract in water to prepare a mixed solution; and
a heat pasteurization or sterilization step of pasteurizing or sterilizing the mixed solution by heat to obtain the coffee beverage.

10. The method of producing the coffee beverage according to claim 9, wherein the water-soluble raw material further comprises sugar.
